# EUROPÄISCHE PATENTSCHRIFT

(11) **EP 0 485 857 B1**
(45) Veröffentlichungstag und Bekanntmachung des Hinweises auf die Patenterteilung: **30.08.1995**
(21) Anmeldenummer: 91118808.4
(22) Anmeldetag: 05.11.1991
(51) Int. Cl.: B60S 1/08, G01V 8/10, G01S 7/48, G01N 21/27, G01D 5/26

(54) **Sensorsystem und seine Verwendung**
Sensor system and its application
Système de senseur et son application

(30) Priorität: 15.11.1990 DE 4036407
(43) Veröffentlichungstag der Anmeldung: 20.05.1992
(73) Patentinhaber: TEMIC TELEFUNKEN microelectronic GmbH, 74072 Heilbronn (DE)
(72) Erfinder: Hasch, Günter, El.-Ing. (grad.), W-7100 Heilbronn (DE); Moser, Helmut, El.-Ing. Dipl.-Ing. (FH), W-7100 Heilbronn (DE)
(74) Vertreter: Maute, Hans-Jürgen, Dipl.-Ing.

(56) Entgegenhaltungen:
- EP-A- 0 191 639
- GB-A- 2 227 093
- US-A- 4 620 141
- US-A- 4 836 682

## Beschreibung

Die Erfindung betrifft ein Sensorsystem gemäß dem Oberbegriff des Patentanspruchs 1; ein derartiges Sensorsystem ist aus der GB-A-2 227 093 bekannt.

Optische Sensoren in Sensorsystemen enthalten eine Sende- und Empfangseinheit, die über eine optische Strecke miteinander gekoppelt sind; Änderungen der Umgebungsverhältnisse des Sensors können zu einer Änderung in der optischen Strecke und damit zu einer Variation des Empfangssignals führen, die von einer Auswerteeinheit des Sensorsystems detektiert und weiterverarbeitet werden kann. Beispielsweise können in Kraftfahrzeugen die durch Niederschläge auf der Windschutzscheibe hervorgerufenen Änderungen der optischen Eigenschaften von einem Sensorsystem registriert und die Scheibenwischer betätigt werden.
Um Änderungen in den optischen Eigenschaften zuverlässig erfassen zu können, muß das Sensorsystem auf einen bestimmten Ausgangswert eingestellt werden - beispielsweise durch Vorgabe des Sendestroms oder durch eine Anpassung der Auswerteschaltung. Beim Einsatz des Sensorsystems unter veränderten Umgebungsbedingungen - im obigen Beispielsfall des Niederschlagsensors die Verwendung eines anderen Windschutzscheibentyps - muß die Empfindlichkeit des optischen Sensors an die veränderten optischen Eigenschaften angepaßt werden; dazu muß entweder die Verstärkung des Senders oder die des Empfängers mittels manueller Einstellung variiert werden.

Bei oft wechselnden Umgebungsbedingungen ist dies für eine Serienfertigung sehr aufwendig und mit hohen Kosten verbunden, da für jeden vorgesehenen Einsatzbereich ein entsprechend angepaßtes System bereitgestellt werden muß.

Der Erfindung liegt die Aufgabe zugrunde, ein optisches Sensorsystem nach dem Oberbegriff des Anspruchs 1 anzugeben, das bei unterschiedlichen Umgebungsbedingungen ohne Anpassungsprobleme verwendet werden kann.
Diese Aufgabe wird erfindungsgemäß durch die Merkmale im Kennzeichen des Patentanspruchs 1 gelöst.
Vorteilhafte Weiterbildungen der Erfindung ergeben sich aus den Unteransprüchen.

Das optische Sensorsystem nach der Erfindung kann mit einer einzigen Ausführungsform bzw. mit einer einzigen festen Einstellung der Grundempfindlichkeit bei allen unterschiedlichen Umgebungsverhältnissen eingesetzt werden. Eine automatische Anpassung des Sensorsystems beim Einsatz unter unterschiedlichen Umgebungsbedingungen erfolgt dadurch, daß zunächst bei der Grundeinstellung des optischen Sensors für den Empfängerstrom unabhängig von den Umgebungsverhältnissen ein fester Wert vorgegeben wird; dazu wird die Amplitude des Sendestroms zunächst auf einen Maximalwert erhöht und anschließend sukzessive so lange reduziert, bis ein durch den Empfänger-Grundstrom festgelegter Schwellwert erreicht wird.
Bei einer Änderung der optischen Eigenschaften in der Umgebung des Sensors wird die optische Kopplung zwischen Sender und Empfänger gestört und demzufolge der von der Empfangseinheit detektierte Strom reduziert; dies wird von einer Sensorelektronikeinheit mittels weiterer Schwellwertschalter ausgewertet und ggf. eine entsprechende Reaktion durch das Sensorsystem ausgelöst. Nach Beendigung der Reaktion des Systems wird das Sensorsystem mittels weiterer Schaltungsmittel wieder auf die Grundeinstellung eingestellt, so daß es nachfolgende weitere Änderungen der Umgebungsverhältnisse sicher erfassen kann.
Vorzugsweise wird das optische Sensorsystem im Wechselspannungsmodus betrieben, wobei in der Sensorelektronikeinheit - je nach Umgebungsverhältnissen - Pulse unterschiedlicher Länge und Breite erzeugt und ausgewertet werden.

Die Erfindung soll anhand eines Ausführungsbeispiels näher beschrieben werden.

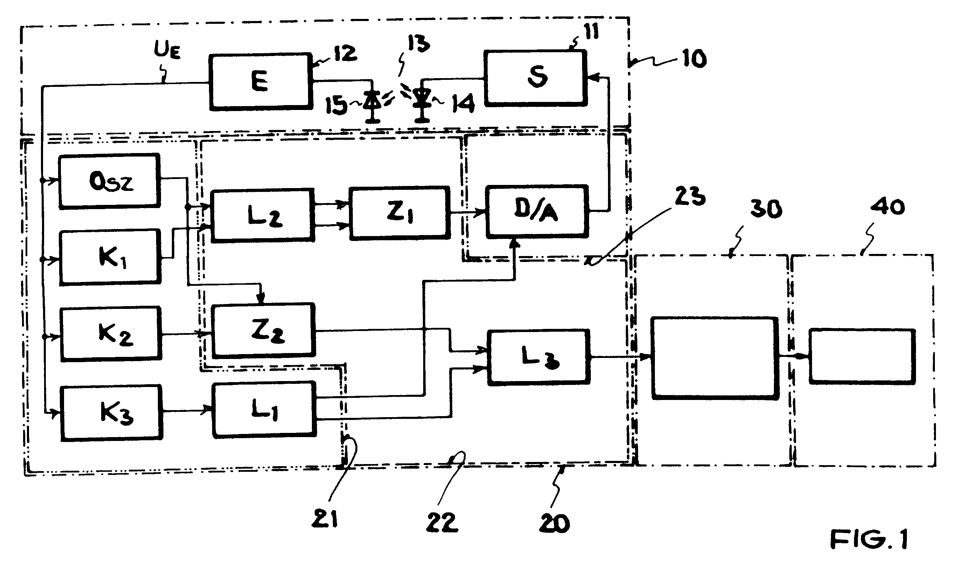

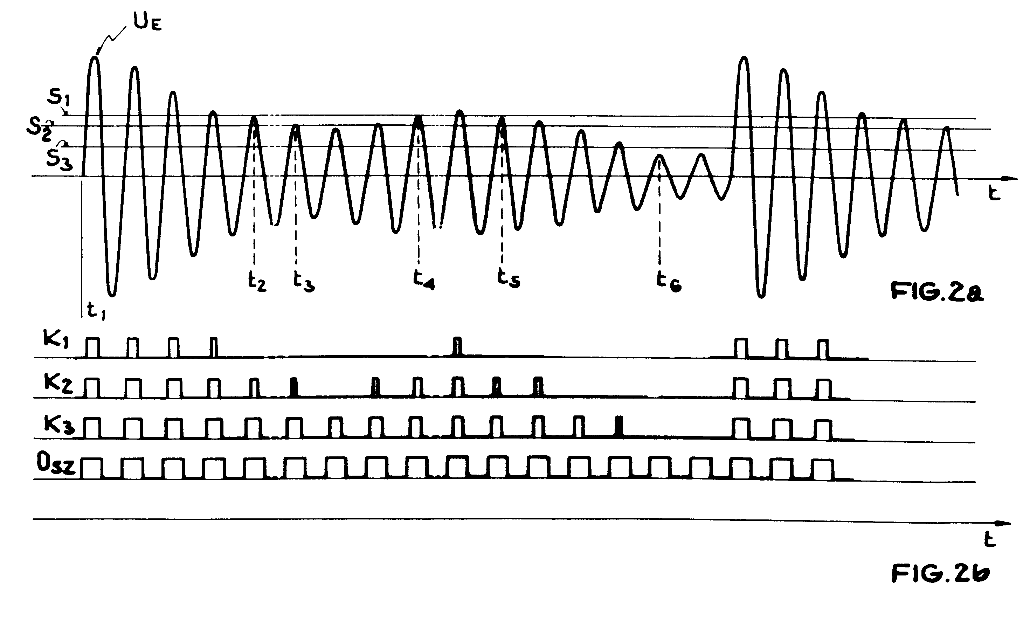

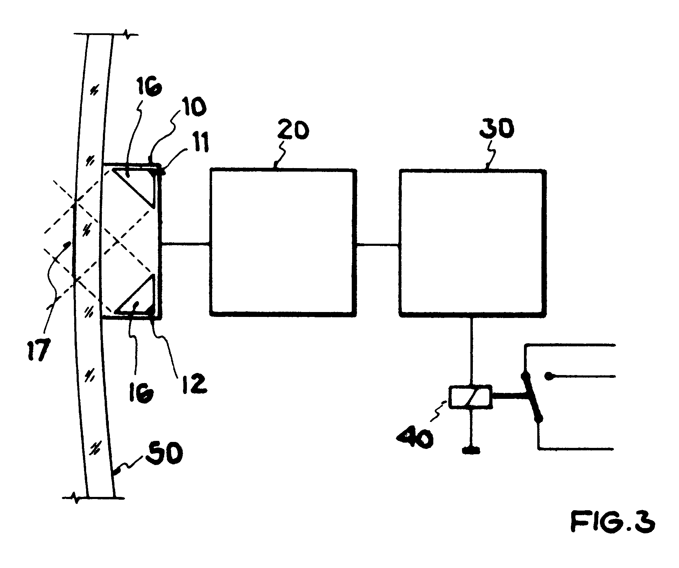

Die Figur 1 zeigt das Blockschaltbild eines optischen Sensorsystems, die Figur 2 den zeitlichen Verlauf der Signale an verschiedenen Punkten des Schaltbilds, und die Figur 3 den schematischen Aufbau eines digitalen Niederschlagsensorsystems.

Gemäß der Figur 1 besteht das Sensorsystem aus dem optischen Sensor mit optischer Einheit 10 und Sensorelektronikeinheit 20, aus der Auswerteeinheit 30 und aus der Steuereinheit 40.
Die optische Einheit 10 umfaßt die Sendeeinheit 11 mit einer Stromquelle und dem Sendeelement 14, die Empfangseinheit 12 mit dem Empfangselement 15 und einem Schwingkreis sowie die optische Strecke 13 zwischen Sendeelement 14 und Empfangselement 15. Der Schwingkreis filtert aus dem vom Sendeelement 14 ausgesandten Frequenzgemisch dasjenige Signal heraus, das seiner Resonanzfrequenz entspricht; dieses Signal wird verstärkt und zur Speisung des Sendeelements 14 verwendet.

Die Sensorelektronikeinheit 20 enthält:
- einen Signalaufbereitungsteil 21 mit dem Taktoszillator OSZ, der aus dem Wechselspannungssignal periodische Taktimpulse erzeugt, mit den Komparatoren K₁, K₂ und K₃, die zur Festlegung von Schwellwerten bei der Signaldetektion dienen und je nach eingestelltem Schwellwert unterschiedlich breite Pulse zur Steuerung der Auswerteschaltung liefern, und mit der ersten Logikstufe L₁, die beim Einschalten des Sensorsystems oder beim Unterschreiten der untersten Komparatorschwelle einen Ausgangsimpuls liefert, der länger als ein normaler Sensorimpuls ist, und der zur Steuerung der Auswertung und zum Einstellen der Amplitude des Sendestroms dient,
- einen Logikteil 22 zur Einstellung der Amplitude des Sendestroms und zur Auswertung des detektierten Signals, mit einem ersten und zweiten Zähler Z₁, Z₂ und mit einer zweiten und dritten Logikstufe L₂, L₃ und
- einen D/A-Wandler 23 zur Steuerung der Amplitude des Sendestroms.

Die Auswerteeinheit 30, beispielsweise ein Rechner oder Mikroprozessor, erkennt die unterschiedlichen Pulsfolgen und kann entsprechende Reaktionen der Steuereinheit 40 auslösen.

In der Figur 2 sind die zeitlichen Abläufe an verschiedenen Punkten des Schaltbilds der Figur 1 dargestellt; die Figur 2a zeigt das Empfangssignal U_{E} mit den durch die Komparatoren K₁ bis K₃ vorgegebenen Schwellwerten S₁, S₂ und S₃, in der Figur 2b sind von oben nach unten die Signale am Ausgang der Komparatoren K₁, K₂ und K₃ sowie das Taktsignal am Ausgang des Taktoszillators OSZ dargestellt.
Zur Festlegung eines definierten Ausgangswerts bzw. zur Grundeinstellung der Empfindlichkeit des optischen Sensors wird der D/A-Wandler 23 beim Einschalten des Sensorsystems (Zeitpunkt t₁) durch die erste Logikstufe L₁ auf den Maximalwert eingestellt, so daß der durch den Wert des D/A-Wandlers vorgebene Sendestrom des Sendeelements und damit auch das Empfangssignal U_{E} am Ausgang der Empfangseinheit den Maximalwert annimmt (Figur 2a) und somit den Schwellwert S₁ überschreitet. Am Ausgang des Komparators K₁ tritt eine Impulsfolge auf (Figur 2b), die den über die zweite Logikstufe L₂ und den ersten Zähler Z₁ angesteuerten D/A-Wandler 23 schrittweise zurücksetzt und damit die Amplitude des Sendestroms reduziert. Dieser Vorgang wird so lange aufrechterhalten und damit auch das Empfangssignal U_{E} so lange reduziert, bis die Schaltschwelle des ersten Komparators K₁, die vom ersten Schwellwert S₁ vorgegeben ist, erreicht ist (Zeitpunkt t₂). Am Ausgang des Komparators K₁ treten keine Impulse mehr auf, der Sensor ist auf eine feste Grundempfindlichkeit eingestellt und bei konstant gehaltenem Sendesignal zur Detektion bereit.
Ändern sich die optischen Eigenschaften (Zeitpunkt t₃) in der Umgebung des optischen Sensors, wird die Amplitude des Empfangssignals U_{E} reduziert und der durch den Komparator K₂ vorgegebene Schwellwert S₂ unterschritten, so daß am Ausgang des Komparators K₂ keine Impulse mehr auftreten. Der zweite Zähler Z₂, der im Normalfall durch die Impulse am Ausgang des Komparators K₂ immer wieder zurückgesetzt wird, kann folglich beim Ausbleiben dieser Impulse hochzählen; dies wird durch die dritte Logikstufe L₃ erkannt und von der Auswerteeinheit 30 weiterverarbeitet. Gleichzeitig wird durch das Hochzählen des zweiten Zählers Z₂ auch der erste Zähler Z₁ und über den D/A-Wandler 23 die Amplitude des Sendesignals so lange erhöht, bis das Empfangssignal U_{E} wieder den Schwellwert S₁ und der Sensor seine Grundeinstellung erreicht hat (Zeitpunkt t₄).
Bei unterschiedlich starken Signaländerungen infolge unterschiedlich starker Änderung der Umgebungsverhältnisse des optischen Sensors ist es oft erforderlich, daß das Sensorsystem unterschiedlich reagiert bzw. anspricht. Hierzu ist der dritte Komparator K₃ vorgesehen, der bei einer großen Änderung des Empfangssignals U_{E} (Zeitpunkt t₅) - Unterschreiten des Schwellwertes S₃ zum Zeitpunkt t₆ - keine Ausgangsimpulse mehr an die erste Logikstufe L₁ liefert. Dies wird durch die Auswerteeinheit 30 erkannt und ausgewertet und eine schnellere oder stärkere Reaktion der Steuereinheit 40 auf die Signaländerung veranlaßt. Damit der Sensor nach dieser großen Signaländerung sofort wieder ansprechbar ist, wird - wie beim Einschaltvorgang - der Sendestrom durch die Logikstufe L₃ und den D/A-Wandler 23 auf seinen Maximalwert hochgefahren und anschließend reduziert, wodurch der Sensor sehr rasch seine Grundeinstellung erreicht.

Als Ausführungsbeispiel eines Sensorsystems ist in der Figur 3 ein Niederschlagsensor dargestellt, der aus der im Infrarotbereich arbeitenden optischen Einheit 10, der Sensorelektronikeinheit 20 und einem Mikroprozessor als Auswerteeinheit 30 besteht. Der Niederschlagsensor soll die Benetzung der Windschutzscheibe 50 eines Kraftfahrzeugs erkennen, die beispielsweise durch einen Feuchtigkeitsfilm oder durch auftreffende Regentropfen verursacht wird und die Scheibenwischanlage durch die Steuereinheit 40 entsprechend des Benetzungsgrads bzw. der Niederschlagsmenge steuern.
Der Niederschlagsensor kann bei unterschiedlichen Windschutzscheiben 50 - weißes Glas, Wärmedämmglas, Blendschutzglas - die unterschiedliche optische Eigenschaften aufweisen, eingesetzt werden, wobei die Steuerung der Scheibenwischanlage durch den Mikroprozessor als Auswerteeinheit 30 in Abhängigkeit der Feuchtigkeit bzw. des Benetzungsgrads der Windschutzscheibe 50 erfolgt - vom langsamen Intervallwischen bei einem Feuchtigkeitsfilm oder einzelnen Regentropfen bis zum schnellen Dauerwischen bei Regenschwällen oder Spritzwasser. Der Niederschlagsensor kann manuell durch Betätigen eines Schalters aktiviert werden, wobei dies ggf. optisch angezeigt werden kann; falls der aktivierte Sensor keine Regentropfen detektiert, kann nach einer bestimmten vorgebbaren Zeit, beispielsweise 60 Sekunden, automatisch ein Wischvorgang ausgelöst werden.
Die optische Einheit 10 besteht beispielsweise aus einer IR-Sendediode als Sendeeinheit 11, einem Linsensystem 16 und einer IR-Empfangsdiode als Empfangseinheit 12, wobei der Sensor an der Innenseite der Windschutzscheibe 50 befestigt ist und das Linsensystem 16 in einem Winkel von 45° zur Windschutzscheibe 50 steht. Die Änderung des an der Außenseite der Windschutzscheibe reflektierten Lichts innerhalb des Sensorbereichs 17 - infolge des Vorhandenseins von Wassertropfen - wird von der Sensorelektronikeinheit 20 erfaßt und diese Reflexionsänderung vom Mikroprozessor ausgewertet. Um Fremdlichteinflüsse auszuschließen, wird mit Wechselspannungen gearbeitet, wobei deren Frequenz beispielsweise 50 kHz beträgt. Der Sensor liefert einen Ausgangsimpuls mit definierter Breite, dessen Häufigkeit vom Benetzungsgrad bzw. von der Anzahl der erkannten Tropfen auf der Windschutzscheibe abhängt.
Zur Grundeinstellung des Niederschlagsensors wird bei allen unterschiedlichen Windschutzscheiben 50 für das Empfangssignal ein fester Schwellwert S₁ - beispielsweise 700 mV - vorgegeben. Treffen einzelne Regentropfen auf die Windschutzscheibe 50 auf, wird das Empfangssignal reduziert und der Schwellwert S₂ unterschritten; da der Schwellwert S₃ nicht unterschritten wird, wird eine langsame Steuerung der Scheibenwischer - beispielsweise nach einer einstellbaren Reaktionszeit - vorgegeben. Bei großen Wassermengen auf der Windschutzscheibe - beispielsweise Spritzwasser oder Dauerregen - wird das Empfangssignal so stark reduziert, daß der Schwellwert S₃ unterschritten wird. Dadurch wird ein sofortiges Betätigen der Scheibenwischer ausgelöst; durch anschließendes Initialisieren des Niederschlagsensors mittels Vorgeben der Grundeinstellung ist das Sensorsystem sofort wieder ansprechbar.

Eine andere Anwendungsmöglichkeit des optischen Sensorsystems besteht beispielsweise darin, Blasen oder Verunreinigungen in Flüssigkeiten zu detektieren. Beispielsweise treten bei farbigen Flüssigkeiten in Rohren mit kontinuierlicher Durchflußmenge bei Verunreinigungen oder Gasblasen Signaländerungen auf, die vom Sensor erkannt werden können.

## Patentansprüche

1. Sensorsystem mit einer optischen Einheit (10), die aus einer über eine optische Strecke (13) gekoppelten Sendeeinheit (11) mit einem Sendeelement (14) und einer Empfangseinheit (12) mit einem Empfangselement (15) besteht, mit einer Sensorelektronikeinheit (20), die zunächst eine von den Umgebungsverhältnissen unabhängige Grundeinstellung der optischen Einheit (10) vorgibt, wobei die Sensorelektronikeinheit (20) einen Signalaufbereitungsteil (21) zum Vergleich des Empfangssignals der optischen Einheit (10) mit bestimmten Umgebungsverhältnissen sowie weitere Schaltungsmittel aufweist, die in Abhängigkeit dieses Vergleichs Änderungen der Umgebungsverhältnisse erkennen und auswerten, und die Grundeinstellung der optischen Einheit (10) wieder derart vorgeben, daß das Sensorsystem auf nachfolgende Änderungen der Umgebungsverhältnisse sicher reagiert, dadurch gekennzeichnet, daß der Signalaufbereitungsteil (21) der Sensorelektronikeinheit (20) mehrere, unterschiedliche Schwellwerte (S₁, S₂, S₃) definierende Komparatoren (K₁, K₂, K₃), deren Schwellwerte (S₁, S₂, S₃) unterschiedlichen Umgebungsverhältnissen entsprechen, einen Taktoszillator (OSZ) und eine erste Logikstufe (L₁) aufweist, und daß als weitere Schaltungsmittel der Sensorelektronikeinheit (20) ein zur Amplitudeneinstellung des Sendestroms des Sendeelements (14) der Sendeeinheit (11) und zur Auswertung dienender Logikteil (22), der eine zweite und dritte Logikstufe (L₂, L₃) und einen ersten und zweiten Zähler (Z₁, Z₂) aufweist, sowie ein zur Vorgabe der Amplitude des Sendestroms des Sendeelements (14) der Sendeeinheit (11) dienender D/A-Wandler (23) vorgesehen sind, wobei zur von den Umgebungsverhältnissen unabhängigen Grundeinstellung für das Empfangssignal (U_{E}) der Empfangseinheit (12) ein fester Grundwert vorgegeben wird, wobei der D/A-Wandler (23), dessen Eingang sowohl mit dem ersten Zähler (Z₁) als auch mit der ersten Logikstufe (L₁) verbunden ist, durch die erste Logikstufe (L₁) zunächst auf einen seinem Maximalwert entsprechenden Wert eingestellt wird, der anschließend über die zweite Logikstufe (L₂) und den ersten Zähler (Z₁) so lange reduziert wird, bis das Empfangssignal (U_{E}) einen ersten Schwellwert (S₁) unterschreitet, der durch den mit dem Ausgang der Empfangseinheit (12) verbundenen ersten Komparator (K₁) festgelegt ist.

2. Sensorsystem nach Anspruch 1, dadurch gekennzeichnet, daß der zweite und der dritte Komparator (K₂, K₃) des Signalaufbereitungsteils (21), deren Eingänge mit dem Ausgang der Empfangseinheit (12) verbunden sind, unterschiedliche Schwellwerte (S₂, S₃) aufweisen und unterschiedliche Ausgangssignale ausgeben, und daß eine dritte Logikstufe (L₃), deren Eingänge mit dem Ausgang des zweiten Zählers (Z₂) und dem Ausgang der ersten Logikstufe (L₁) verbunden sind, das Ausbleiben der Komparator-Ausgangssignale beim Unterschreiten des zweiten und dritten Schwellwertes (S₂, S₃) durch das Empfangssignal (U_{E}) erfaßt und auswertet.

3. Sensorsystem nach einem der Ansprüche 1 bis 2, dadurch gekennzeichnet, daß mit dem Ausgang der dritten Logikstufe (L₃) eine Auswerteeinheit (30) verbunden ist, die in Abhängigkeit der Komparator-Ausgangssignale eine Reaktion über eine mit der Auswerteeinheit (30) verbundene Steuereinheit (40) auslöst, und daß ein Unterschreiten des zweiten und dritten Schwellwertes (S₂, S₃) durch das Empfangssignal (U_{E}) von der Auswerteeinheit (30) unterschiedlich ausgewertet wird und zu unterschiedlichen Reaktionen der Steuereinheit (40) führt.

4. Sensorsystem nach einem der Ansprüche 1 bis 3, dadurch gekennzeichnet, daß nach dem Unterschreiten der Schwellwerte (S₁, S₂, S₃) durch das Empfangssignal (U_{E}) mittels des Logikteils (22) wieder die Grundeinstellung der optischen Einheit (10) vorgegeben wird, und daß dies in Abhängigkeit des jeweils unterschrittenen Schwellwerts unterschiedlich erfolgt.

5. Sensorsystem nach Anspruch 4, dadurch gekennzeichnet, daß am Ausgang des zweiten Komparators (K₂) die zweite Logikstufe (L₂) angeschlossen ist, deren Ausgang mit dem ersten Zähler (Z₁) verbunden ist, und daß beim Unterschreiten des zweiten Schwellwertes (S₂) durch das Empfangssignal (U_{E}) die zweite Logikstufe (L₂) den ersten Zähler (Z₁) aufwärts betreibt, so daß die Amplitude des Sendestroms des Sendeelements (14) über den D/A-Wandler (23) so lange erhöht wird, bis das Empfangssignal (U_{E}) wieder den ersten Schwellwert (S₁) erreicht.

6. Sensorsystem nach Anspruch 4, dadurch gekennzeichnet, daß die am Ausgang des dritten Komparators (K₃) angeschlossene erste Logikstufe (L₁) beim Unterschreiten des dritten Schwellwertes (S₃) durch das Empfangssignal (U_{E}) den D/A-Wandler (23) und damit die Amplitude des Sendestroms des Sendeelements (14) auf den Maximalwert einstellt.

7. Sensorsystem nach einem der Ansprüche 1 bis 6, dadurch gekennzeichnet, daß die optische Einheit (10) mit einem Wechselspannungssignal betrieben wird, und daß der Ausgang der Empfangseinheit (12) mit dem Taktoszillator (OSZ) verbunden ist, der eine periodische Pulsfolge erzeugt.

8. Sensorsystem nach Anspruch 7, dadurch gekennzeichnet, daß die Komparatoren (K₁, K₂, K₃) in Abhängigkeit des Empfangssignals (U_{E}) Ausgangspulse unterschiedlicher Breite und Länge liefern, und daß die Auswertung mittels der Auswerteeinheit (30) und die Reaktion der Steuereinheit (40) in Abhängigkeit von der Zahl und der Länge der Komparator-Ausgangspulse erfolgt.

9. Verwendung des Sensorsystems nach einem oder mehreren der Ansprüche 1 bis 8 als Niederschlagsensorsystem zur Steuerung der Scheibenwischanlage eines Kraftfahrzeugs bei unterschiedlichen Benetzungsgraden der Windschutzscheibe.

## Claims

1. Sensor system including an optical unit (10), which consists of a transmitting unit (11) incorporating a transmitting element (14) coupled via an optical path (13) and a receiving unit (12) incorporating a receiving unit (15), and including an electronic sensor unit (20), which initially provides a basic setting of the optical unit (10) independently of the ambient conditions, wherein the electronic sensor unit (20) comprises a signal processing section (21) for comparing the signal received by the optical unit (10) with certain ambient conditions as well as further circuit means which, in dependence on this comparison, identify and evaluate changes in the ambient conditions and re-set the basic setting of the optical unit (10) in such a way that the sensor system reacts correctly to subsequent changes in the ambient conditions, characterised in that, the signal processing section (21) of the electronic sensor unit (20) comprises a plurality of comparators (K1, K2, K3), which define different threshold values (S1, S2, S3) and whose threshold values (S1, S2, S3) correspond to different ambient conditions, a clock pulse oscillator (OSZ) and a first logic stage (L1) and that, as further circuit means of the electronic sensor unit (20), there are provided a logic section (22) which serves for setting the amplitude of the transmitter current of the transmitting element (14) of the transmitting unit (11) and for performing the evaluation and which comprises a second and third logic stage (L2, L3) and a first and second counter (Z1, Z2) as well as a D/A converter (23) which serves for indicating the amplitude of the transmitter current of the transmitting element (14) of the transmitting unit (11), wherein a fixed basic value is predetermined for the signal (UE) received by the receiving unit (12) for the purpose of providing the basic setting which is independent of the ambient conditions, wherein the D/A converter (23), whose input is connected to both the first counter (Z1) and the first logic stage (L1), is initially set by the first logic stage (L1) to a value corresponding to its maximum value, said value subsequently being reduced by the second logic stage (L2) and the first counter (Z1) until such time as the received signal (UE) falls below a first threshold value (S1) which is determined by the first comparator (K1) which is connected to the output of the receiving unit (12).

2. Sensor system in accordance with Claim 1, characterised in that, the second and the third comparators (K2, K3) of the signal processing section (21), whose inputs are connected to the output of the receiving unit (12), exhibit different threshold values (S2, S3) and emit different output signals and that a third logic stage (L3), whose inputs are connected to the output of the second counter (Z2) and to the output of the first logic stage (L1), senses and evaluates the absence of the comparator output signals when the received signal (UE) falls below the second and third threshold values (S2, S3).

3. Sensor system in accordance with any of the Claims 1 to 2, characterised in that, an evaluating unit (30) is connected to the output of the third logic stage (L3) and triggers-off a reaction via a control unit (40) which is connected to the evaluating unit (30) in dependence on the comparator output signals, and that, when the received signal (UE) falls below the second and third threshold values (S2, S3), this is evaluated in different manners by the evaluating unit (30) and this leads to different reactions of the control unit (40).

4. Sensor system in accordance with any of the Claims 1 to 3, characterised in that, when the received signal (UE) falls below the threshold values (S1, S2, S3), the basic setting of the optical unit (10) is re-set by means of the logic section (22) and that this occurs in different manners in dependence upon which of the respective threshold values the signal has fallen-below.

5. Sensor system in accordance with Claim 4, characterised in that, the second logic stage (L2), whose output is connected to the first counter (Z1), is connected to the output of the second comparator (K2) and that, when the received signal (UE) falls below the second threshold value (S2), the second logic stage (L2) drives the first counter (Z1) upwardly so that the amplitude of the transmitter current of the transmitting element (14) is increased by the D/A converter (23) until such time as the received signal (UE) again reaches the first threshold value (S1).

6. Sensor system in accordance with Claim 4, characterised in that, when the received signal (UE) falls below the third threshold value (S3), the first logic stage (L1), which is connected to the output of the third comparator (K3), sets the D/A converter (23) and hence sets the amplitude of the transmitter current of the transmitting element (14) to the maximum value.

7. Sensor system in accordance with any of the Claims 1 to 6, characterised in that, the optical unit (10) is driven by an alternating voltage signal and that the output of the receiving unit (12) is connected to the clock pulse oscillator (OSZ) which generates a periodic pulse sequence.

8. Sensor system in accordance with Claim 7, characterised in that, the comparators (K1, K2, K3) deliver output pulses of different width and length in dependence on the received signal (UE) and that the evaluation by means of the evaluation unit (30) and the reaction of the control unit (40) is effected in dependence on the number and the length of the comparator output pulses.

9. Use of the sensor system in accordance with any one or more of the Claims 1 to 8 as a precipitation sensing system for controlling the windscreen wiping equipment of a motor vehicle when the windscreen is subjected to different degrees of wetting.

## Revendications

1. Système de senseur comprenant une unité optique (10) composée d'une unité d'émission (11), possédant un élément d'émission (14), et d'une unité de réception (12), possédant un élément de réception (15), qui sont couplées par un trajet optique (13), une unité électronique (20) du senseur, laquelle, pour commencer, prédétermine un réglage de base de l'unité optique (10), réglage qui est indépendant des conditions d'environnement, l'unité électronique (20) du senseur comportant une partie (21) de préparation du signal pour la comparaison du signal de réception de l'unité optique (10) avec des conditions d'environnement déterminées, ainsi que des moyens de couplage supplémentaires qui, en fonction de cette comparaison, détectent et exploitent des changements des conditions d'environnement, et prédéterminent le réglage de base de l'unité optique (10) de nouveau de manière que le système de senseur réagisse de manière sûre à des changements consécutifs des conditions d'environnement, caractérisé en ce que la partie (21) de préparation du signal de l'unité électronique (20) du senseur comporte plusieurs comparateurs (K₁, K₂, K₃) définisant plusieurs seuils (S₁, S₂, S₃) différents qui correspondent à des conditions d'environnement différentes, un oscillateur générateur d'horloge (OSZ) et un premier étage logique (L₁), et que, en tant que moyens de couplage supplémentaires de l'unité électronique (20) du senseur, on a prévu une partie logique (22) servant au réglage d'amplitude du courant d'émission de l'élément d'émission (14) de l'unité d'émission (11), ainsi qu'à l'exploitation, unité logique qui comporte un deuxième et un troisième étage logique (L₂, L₃) et un premier et un deuxième compteur (Z₁, Z₂), ainsi qu'un convertisseur N/A (23) servant à prédéterminer l'amplitude du courant d'émission de l'élément d'émission (14) de l'unité d'émission (11), avec prédétermination d'une valeur de base fixe pour le réglage de base, indépendant des conditions d'environnement, du signal de réception (U_{E}) de l'unité de réception (12), le convertisseur N/A (23), dont l'entrée est connectée à la fois au premier compteur (Z₁) et au premier étage logique (L₁), étant réglé tout d'abord par le premier étage logique (L₁) à une valeur correspondant à sa valeur maximale, laquelle est ensuite réduite, au moyen du deuxième éage logique (L₂) et du premier compteur (Z₁), jusqu'à ce que le signal de réception (U_{E}) descende au-dessous d'un premier seuil (S₁) fixé par le premier comparateur (K₁), lequel est relié à la sortie de l'unité de réception (12).

2. Système de senseur selon la revendication 1, caractérisé en ce que les deuxième et troisième comparateurs (K₂, K₃) de la partie (21) de préparation du signal, dont les entrées sont reliées à la sortie de l'unité de réception (12), présentent des seuils (S₂, S₃) différents et délivrent des signaux de sortie différents, et qu'un troisième étage logique (L₃) dont les entrées sont reliées à la sortie du deuxième compteur (Z₂) et à la sortie du premier étage logique (L₁), détecte et exploite l'absence des signaux de sortie de comparateur lorsque le signal de réception (U_{E}) descend sous les deuxième et troisième seuils (S₂, S₃).

3. Système de senseur selon la revendication 1 ou 2, caractérisé en ce que la sortie du troisième étage logique (L₃) est reliée à une unité d'exploitation (30) déclenchant, en fonction des signaux de sortie des comparateurs, une réaction par l'intermédiaire d'une unité de commande (40) reliée à l'unité d'exploitation (30), et que l'abaissement du signal de réception (U_{E}) au-dessous du deuxième et du troisième seuil (S₂, S₃) est exploité différemment par l'unité d'exploitation (30) et conduit à des réactions différentes de l'unité de commande (40).

4. Système de senseur selon une des revendications 1 à 3, caractérisé en ce que, après l'abaissement du signal de réception (U_{E}) sous les seuils (S₁, S₂, S₃), le réglage de base de l'unité optique (10) est prédéterminé de nouveau au moyen de la partie logique (22), et que ce processus s'effectue différemment suivant le seuil sous lequel est descendu le signal de réception.

5. Système de senseur selon la revendication 4, caractérisé en ce que le deuxième étage logique (L₂) est raccordé à la sortie du deuxième comparateur (K₂) et relié par sa sortie au premier compteur (Z₁), et que, lorsque le signal de réception (U_{E}) descend sous le deuxième seuil (S₂), le deuxième étage logique (L₂) produit le comptage en avant du premier compteur (Z₁), de sorte que l'amplitude du courant d'émission de l'élément d'émission (14) est augmentée, par l'intermédiaire du convertisseur N/A (23), jusqu'à ce que le signal de réception (U_{E}) atteigne de nouveau le premier seuil (S₁).

6. Système de senseur selon la revendication 4, caractérisé en ce que le premier étage logique (L₁), raccordé à la sortie du troisième comparateur (K₃), ajuste le convertisseur N/A (23), et par suite l'amplitude du courant d'émission de l'élément d'émission (14), à la valeur maximale lorsque le signal de réception (U_{E}) descend sous le troisième seuil (S₃).

7. Système de senseur selon une des revendications 1 à 6, caractérisé en ce que l'unité optique (10) est actionnée par un signal à tension alternative et que la sortie de l'unité de réception (12) est reliée à l'oscillateur générateur d'horloge (OSZ), lequel génère une suite d'impulsions périodiques.

8. Système de senseur selon la revendication 7, caractérisé en ce que les comparateurs (K₁, K₂, K₃) fournissent, en fonction du signal de réception (U_{E}), des impulsions de sortie de différentes largeurs et amplitudes et que l'exploitation au moyen de l'unité d'exploitation (30) et la réaction de l'unité de commande (40) s'effectuent en fonction du nombre et de l'amplitude des impulsions de sortie des comparateurs.

9. Utilisation du système de senseur selon une ou plusieurs des revendications 1 à 8 comme système de senseur de précipitation pour commander les essuie-glaces d'un véhicule automobile à différents degrés de mouillage du pare-brise.
